# EUROPEAN PATENT APPLICATION

(11) **EP 4 361 302 A1**
(43) Date of publication of application: **01.05.2024**
(21) Application number: 22828415.4
(22) Date of filing: 21.06.2022
(51) Int. Cl.: C22C 13/00, B23K 35/26, B23K 35/363

(54) **FLUX AND SOLDER PASTE**

(30) Priority: 24.06.2021 JP 2021104992
(71) Applicant: Senju Metal Industry Co., Ltd., Tokyo 120-8555 (JP)
(72) Inventor: HASHIMOTO, Yutaka, Tokyo 120-8555 (JP); KANEKO, Mutsuki, Tokyo 120-8555 (JP)
(74) Representative: Lavoix
(86) International application number: PCT/JP2022/024711
(87) International publication number: WO 2022/270499

(57) **Abstract**

A flux and a solder paste capable of minimizing the time-dependent changes in viscosity when stored at 30°C and minimizing the coloration of flux residues while having favorable reflow properties and favorable cleanability of flux residues are provided. As such a flux, a flux containing a rosin, a thixotropic agent, an activator, and a solvent is adopted. The rosin includes one or more selected from the group consisting of an acid-modified rosin, a hydrogenated rosin, and an acid-modified hydrogenated rosin, and the thixotropic agent includes a compound represented by General Formula (1). In General Formula (1), R¹¹ and R¹² each independently represent a hydrocarbon group which has 1 to 3 carbon atoms and may have a substituent, or a single bond. R²¹ and R²² each independently represent a hydrocarbon group which has 7 to 29 carbon atoms and may have a substituent. R¹³ represents a substituent, n represents an integer of 0 to 4.

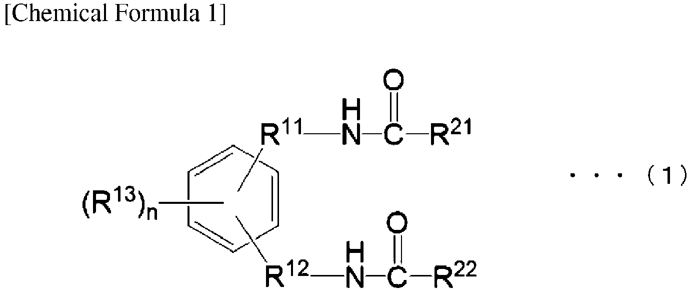

## Description

### [Technical Field]

The present invention relates to a flux and a solder paste.

Priority is claimed on Japanese Patent Application No. 2021-104992, filed June 24, 2021, the content of which is incorporated herein by reference.

### [Background Art]

A flux used for soldering has an effect of chemically removing metal oxides present on the metal surface of an object to be joined, which is a soldering target, and on a solder, thereby enabling the movement of metal elements at the boundary between the metal surface of the object to be joined and the solder. Therefore, by performing soldering using the flux, an intermetallic compound is formed between the metal surface of the object to be joined and the solder. Thereby, strong joining can be obtained. Such a flux generally contains a resin component, a solvent, an activator, a thixotropic agent, and the like.

A solder paste is a composite material obtained by mixing a solder alloy powder and a flux. In soldering using a solder paste, the solder paste is first printed on a board, and thereafter components are mounted to heat the board on which the components are mounted in a heating furnace called a reflow furnace. Subsequently, excess flux is removed by cleaning.

Flux (flux residue) remaining even after cleaning after reflow may cause leakage current, migration, and the like. In this regard, a flux having favorable cleanability of flux residues is used.

The phrase "having favorable cleanability of flux residues" means that excess flux is easily removed by cleaning using a cleaning agent.

For example, a flux containing a hydrogenated castor oil having a relatively low melting point has been proposed as a thixotropic agent (Patent Document 1).

In addition, in the Examples of Patent Document 2, a flux containing a hydrogenated castor oil and a hydrogenated rosin is disclosed.

### [Citation List]

### [Patent Documents]

[Patent Document 1]
   Japanese Unexamined Patent Application, First Publication No. H10-249577
[Patent Document 2]
   Japanese Unexamined Patent Application, First Publication No. 2014-117745

### [Summary of Invention]

### [Technical Problem]

Regarding a solder paste in which the flux containing a hydrogenated castor oil and a polymerized rosin disclosed in Patent Document 1 is used, the coloration of flux residues may occur.

Furthermore, regarding a solder paste in which the flux containing a hydrogenated castor oil and a hydrogenated rosin disclosed in Patent Document 2 is used, the viscosity may increase over time when stored at 30°C.

Therefore, an object of the present invention is to provide a flux and a solder paste capable of minimizing the time-dependent changes in viscosity when stored at 30°C and minimizing the coloration of flux residues while having favorable reflow properties and favorable cleanability of flux residues.

### [Solution to Problem]

In order to achieve the above-mentioned object, the inventors of the present invention diligently studied the components of a flux.

The inventors of the present invention first studied a resin component.

The inventors of the present invention found that the coloration of flux residues may occur in a solder paste in which a flux containing a polymerized rosin in addition to a hydrogenated castor oil is used.

The inventors of the present invention further found that reflow properties may not be sufficient in a solder paste in which a flux containing a rosin ester in addition to a hydrogenated castor oil is used.

Therefore, the inventors of the present invention prepared a solder paste in which a flux containing a hydrogenated rosin or an acid-modified rosin in addition to a hydrogenated castor oil is used.

However, the inventors of the present invention found that in this solder paste, reflow properties are sufficient, and the coloration of flux residues is sufficiently minimized; however, there is a problem of a significant increase in viscosity when stored at 30°C.

The inventors of the present invention found that, even when a hydrogenated rosin or an acid-modified rosin is used, it is possible to minimize the time-dependent changes in viscosity when stored at 30°C and to minimize the coloration of flux residues while having favorable reflow properties and favorable cleanability of flux residues by using a compound (specific thixotropic agent) represented by General Formula (1) below in combination, and the present invention was completed.

The present invention includes the following aspects.
[1] A flux containing: a rosin; a thixotropic agent; an activator; and a solvent,
   in which the rosin includes one or more specific rosins selected from the group consisting of an acid-modified rosin, a hydrogenated rosin, and an acid-modified hydrogenated rosin, and
   the thixotropic agent includes a compound represented by General Formula (1). 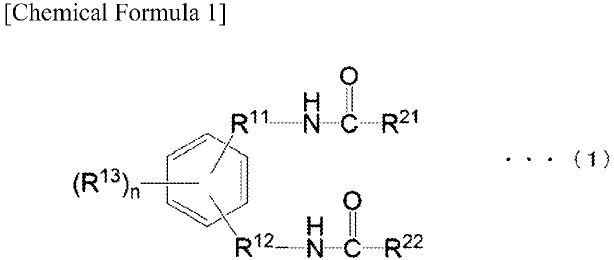 [In the formula, R¹¹ and R¹² each independently represent a hydrocarbon group which has 1 to 3 carbon atoms and may have a substituent, or a single bond; R²¹ and R²² each independently represent a hydrocarbon group which has 7 to 29 carbon atoms and may have a substituent; R¹³ represents a substituent; and n represents an integer of 0 to 4.]
[2] The flux according to [1], in which a content of the compound represented by General Formula (1) is 0.5% by mass or more and 10% by mass or less with respect to a total mass of the flux.
[3] The flux according to [1] or [2], in which the thixotropic agent further includes an ester-based thixotropic agent, and
   a content of the ester-based thixotropic agent is more than 0% by mass and equal to or less than 4% by mass with respect to a total mass of the flux.
[4] The flux according to any one of [1] to [3], in which a content of the activator is 1% by mass or more and 20% by mass or less with respect to a total mass of the flux.
[5] The flux according to any one of [1] to [4], in which a content of the specific rosin is 10% by mass or more and 70% by mass or less with respect to a total mass of the flux.
[6] The flux according to any one of [1] to [5], in which the activator includes one or more selected from the group consisting of an organic acid-based activator and a halogen-based activator.
[7] A solder paste containing: a solder alloy powder; and the flux according to any one of [1] to [6].

### [Advantageous Effects of Invention]

According to the present invention, it is possible to provide a flux and a solder paste capable of minimizing the time-dependent changes in viscosity when stored at 30°C and minimizing the coloration of flux residues while having favorable reflow properties and favorable cleanability of flux residues.

### [Brief Description of Drawings]

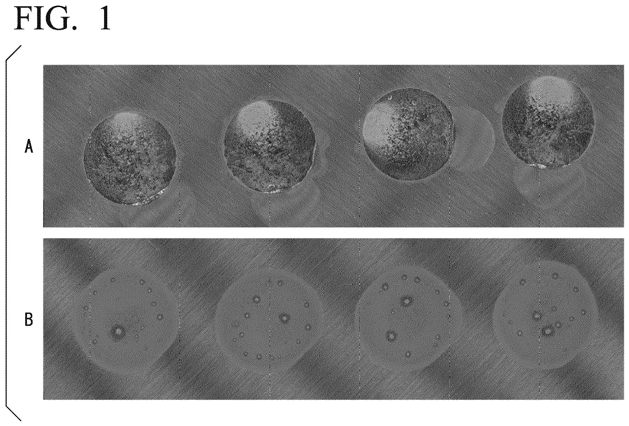

FIG. 1 shows photographs showing the state of a copper plate after printing and reflowing a solder paste as diagrams showing the determination criteria for evaluating reflow properties.

### [Description of Embodiments]

### (Flux)

A flux of the present embodiment contains a rosin, a thixotropic agent, an activator, and a solvent.

### <Rosin>

In the present invention, the term "rosin" includes natural resins containing a mixture of abietic acid and its isomer with abietic acid as a main component, and resins (sometimes referred to as rosin derivatives) which are obtained by chemically modifying natural resins. The content of abietic acid in the natural resin is 40% by mass or more and 80% by mass or less, for example. Examples of typical isomers of abietic acid include neoabietic acid, palustric acid, and levopimaric acid. The structure of abietic acid is shown below.

In the present specification, the term "main component" refers to a component contained in a compound by an amount of 40% by mass or more, among components constituting the compound.

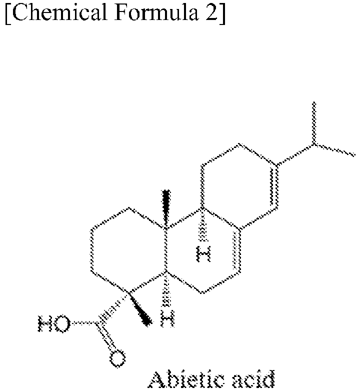

In the present invention, the "resins (rosin derivatives) which are obtained by chemically modifying natural resins" include those obtained by subjecting the above-mentioned "natural resins" to one or more treatments selected from the group consisting of hydrogenation, dehydrogenation, neutralization, alkylene oxide addition, amidation, dimerization and multimerization, esterification, and Diels-Alder cycloaddition.

### <<Specific rosin>>

The rosin contained in the flux of the present embodiment includes one or more specific rosins selected from the group consisting of an acid-modified rosin, a hydrogenated rosin, and an acid-modified hydrogenated rosin.

Examples of the acid-modified rosins include acid-modified disproportionated rosins, acid anhydride-modified disproportionated rosins, phenol-modified rosins, α,β-unsaturated carboxylic acid-modified products (acrylated rosins, maleated rosins, fumarated rosins, and the like), purified products and disproportionated products of the α,β-unsaturated carboxylic acid-modified products, and acid-modified rosin soaps.

Examples of the hydrogenated rosins include hydrogenated natural resins containing a mixture of abietic acid and its isomer, for example, a rosin containing dihydroabietic acid and tetrahydroabietic acid as main components.

Examples of the acid-modified hydrogenated rosins include acrylic acid-modified hydrogenated rosins, acid anhydride-modified hydrogenated rosins, and hydrides of the α,β-unsaturated carboxylic acid-modified products.

For the specific rosin, one type may be used alone, or two or more types may be mixed and used.

As the specific rosin, it is preferable to use one or more selected from the group consisting of a hydrogenated rosin and an acid-modified hydrogenated rosin.

As the acid-modified hydrogenated rosin, it is preferable to use acrylic acid-modified hydrogenated rosin. As the hydrogenated rosin, it is preferable to use a rosin containing dihydroabietic acid and tetrahydroabietic acid as main components.

The content of the above-mentioned specific rosin in the above-mentioned flux is preferably 10% by mass or more and 70% by mass or less, more preferably 15% by mass or more and 60% by mass or less, and further preferably 20% by mass or more and 50% by mass or less with respect to the total amount (100% by mass) of the flux.

### <<Other rosins>>

The rosin may include other rosins in addition to the specific rosins.

Examples of the other rosins include raw material rosins such as gum rosins, wood rosins, and tall oil rosins, distilled rosins, and rosin derivatives other than the specific rosins.

Examples of the rosin derivatives other than the specific rosins include purified rosin and modified rosin other than the specific rosins.

Examples of the modified rosins other than the specific rosins include polymerized rosins, polymerized hydrogenated rosins, disproportionated rosins, rosin esters, purified products, hydrides, and disproportionated products of the polymerized rosins, rosin alcohols, rosin amines, hydrogenated rosin esters, and rosin soaps.

Examples of the rosin amines include a dehydroabietylamine and a dihydroabietylamine.

The rosin amine means so-called a disproportionated rosin amine.

The structures of the dehydroabietylamine and the dihydroabietylamine are each shown below.

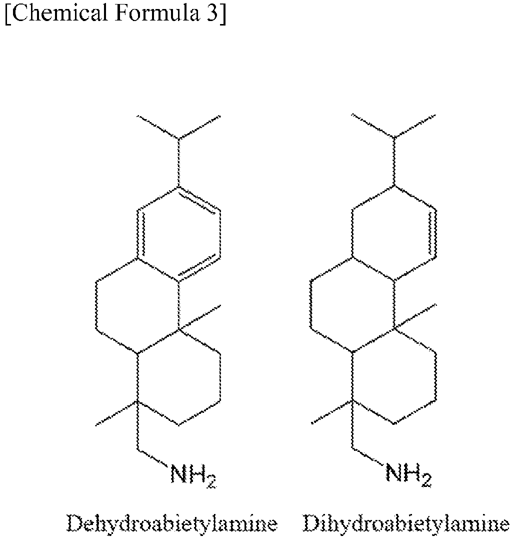

The total content of the above-mentioned rosin in the above-mentioned flux is preferably 10% by mass or more and 70% by mass or less, and more preferably 20% by mass or more and 50% by mass or less with respect to the total amount (100% by mass) of the flux.

The content of the specific rosin in the above-mentioned flux is preferably 20% by mass or more and 100% by mass or less, more preferably 40% by mass or more and 100% by mass or less, further preferably 50% by mass or more and 100% by mass or less, and particularly preferably 65% by mass or more and 100% by mass or less with respect to the total content (100% by mass) of the above-mentioned rosin.

When the content of the specific rosin is within the above-mentioned range, the coloration of flux residues can be reduced, and also, reflow properties can be improved.

### <Thixotropic agent>

The thixotropic agent contained in the flux of the present embodiment includes a specific thixotropic agent.

### «Specific thixotropic agent»

The specific thixotropic agent is a compound represented by General Formula (1) below.

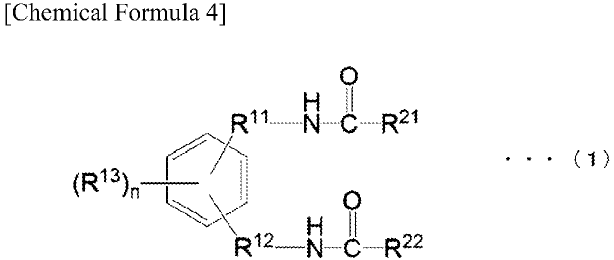

[In the formula, R¹¹ and R¹² each independently represent a hydrocarbon group which has 1 to 3 carbon atoms and may have a substituent, or a single bond; R²¹ and R²² each independently represent a hydrocarbon group which has 7 to 29 carbon atoms and may have a substituent; R¹³ represents a substituent; and n represents an integer of 0 to 4.]

R¹¹ and R¹² are each independently preferably a hydrocarbon group which has 1 carbon atom and may have a substituent, or a single bond, more preferably a hydrocarbon group which has 1 carbon atom and may have a substituent, and further preferably a methylene group (-CH₂-).

R²¹ and R²² are each independently preferably a hydrocarbon group which has 9 to 25 carbon atoms and may have a substituent, more preferably a hydrocarbon group which has 11 to 21 carbon atoms and may have a substituent, further preferably a hydrocarbon group which has 13 to 19 carbon atoms and may have a substituent, and particularly preferably a hydrocarbon group which has 15 to 19 carbon atoms and may have a substituent.

When R²¹ and R²² have a substituent, examples of the above-mentioned substituents include a hydroxyl group, -CONH₂, an amino group (-NH₂), and a carboxyl group. Among these, the substituent that R²¹ and R²² may have is preferably a hydroxyl group.

The bonding position of R¹¹-NHCO-R²¹ on the benzene ring is preferably in a meta or para positional relationship with respect to the bonding position of R¹²-NHCO-R²² on the benzene ring, and is more preferably in a meta positional relationship.

R¹³ is preferably a hydrocarbon group having 1 to 5 carbon atoms, a hydroxyl group, or a halogen atom, and is more preferably a hydrocarbon group having 1 to 5 carbon atoms.

### n is preferably 0.

As the compound represented by General Formula (1) above, it is preferable to use one or more selected from the group consisting of m-xylylene bis lauric acid amide, m-xylylene bis behenic acid amide, m-xylylene bis dihydroxystearic acid amide, m-xylylene bis stearic acid amide, m-xylylene bis hydroxystearic acid amide, p-xylylene bis hydroxystearic acid amide, m-phenylene bis hydroxystearic acid amide, and p-phenylene bis hydroxystearic acid amide; and a compound represented by Formula (2) below is more preferable. The compound represented by Formula (2) below is m-xylylene bis hydroxystearic acid amide.

For the specific thixotropic agent, one type may be used alone, or two or more types may be mixed and used.

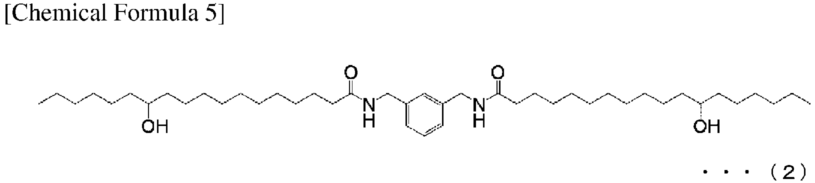

### <<Other thixotropic agents>>

The thixotropic agent contained in the flux of the present embodiment may include ester-based thixotropic agents, amide-based thixotropic agents other than the compound represented by General Formula (1) above, sorbitol-based thixotropic agents, and the like as other thixotropic agents, in addition to the specific thixotropic agents.

Examples of the ester-based thixotropic agents include ester compounds, and specific examples thereof include a hydrogenated castor oil and ethyl myristate.

Examples of the amide-based thixotropic agents include monoamides, bisamides other than the compound represented by General Formula (1) above, and polyamides.

Examples of the monoamides include monoamides such as lauric acid amide, palmitic acid amide, stearic acid amide, behenic acid amide, hydroxystearic acid amide, saturated fatty acid amide, oleic acid amide, erucic acid amide, unsaturated fatty acid amide, 4-methylbenzamide (p-toluamide), p-toluenemethanamide, aromatic amide, hexamethylene hydroxystearic amide, substituted amide, methylolstearic amide, methylolamide, and fatty acid ester amide.

Examples of the bisamides include bisamides such as methylene bis stearic acid amide, ethylene bis lauric acid amide, ethylene bis hydroxy fatty acid (fatty acid with C6 to 24 carbon atoms) amide, ethylene bis hydroxystearic acid amide, saturated fatty acid bisamide, methylene bis oleic acid amide, unsaturated fatty acid bisamide, and aromatic bisamides other than the compound represented by General Formula (1) above.

Examples of the polyamides include saturated fatty acid polyamide, unsaturated fatty acid polyamide, aromatic polyamide, 1,2,3-propanetricarboxylic acid tris(2-methylcyclohexylamide), cyclic amide oligomers, and acyclic amide oligomers.

Examples of the above-mentioned cyclic amide oligomers include an amide oligomer in which a dicarboxylic acid and a diamine are cyclically polycondensed, an amide oligomer in which a tricarboxylic acid and a diamine are cyclically polycondensed, an amide oligomer in which a dicarboxylic acid and a triamine are cyclically polycondensed, an amide oligomer in which a tricarboxylic acid and a triamine are cyclically polycondensed, an amide oligomer in which a dicarboxylic acid and a tricarboxylic acid, and a diamine are cyclically polycondensed, an amide oligomer in which a dicarboxylic acid and a tricarboxylic acid, and a triamine are cyclically polycondensed, an amide oligomer in which a dicarboxylic acid, and a diamine and a triamine are cyclically polycondensed, an amide oligomer in which a tricarboxylic acid, and a diamine and a triamine are cyclically polycondensed, and an amide oligomer in which a dicarboxylic acid and a tricarboxylic acid, and a diamine and a triamine are cyclically polycondensed.

Furthermore, examples of the above-mentioned acyclic amide oligomers include a case of an amide oligomer in which a monocarboxylic acid, and a diamine and/or a triamine are acyclically polycondensed, and a case of an amide oligomer in which a dicarboxylic acid and/or a tricarboxylic acid, and a monoamine are acyclically polycondensed. In the case of an amide oligomer containing a monocarboxylic acid or a monoamine, the monocarboxylic acid and the monoamine function as terminal molecules, thereby resulting in an acyclic amide oligomer having a reduced molecular weight. Furthermore, when the acyclic amide oligomer is an amide compound in which a dicarboxylic acid and/or a tricarboxylic acid, and a diamine and/or a triamine are acyclically polycondensed, it is an acyclic polymer-based amide polymer. Furthermore, the acyclic amide oligomer also includes an amide oligomer in which a monocarboxylic acid and a monoamine are acyclically condensed.

Examples of the sorbitol-based thixotropic agents include dibenzylidene-D-sorbitol, bis(4-methylbenzylidene)-D-sorbitol, (D-)sorbitol, monobenzylidene(-D-)sorbitol, and mono(4-methylbenzylidene)-(D-)sorbitol.

For the other thixotropic agents, one type may be used alone, or two or more types may be mixed and used.

The total content of the above-mentioned thixotropic agent in the above-mentioned flux is preferably 0.5% by mass or more and 30% by mass or less, more preferably 3% by mass or more and 20% by mass or less, and further preferably 4.5% by mass or more and 10% by mass or less with respect to the total amount (100% by mass) of the flux.

The content of the compound represented by General Formula (1) above in the above-mentioned flux is preferably 0.1% by mass or more and 20% by mass or less, more preferably 0.2% by mass or more and 15% by mass or less, further preferably 0.4% by mass or more and 15% by mass or less, and particularly preferably 0.5% by mass or more and 10% by mass or less with respect to the total amount (100% by mass) of the flux.

The content of the specific thixotropic agent in the above-mentioned flux is preferably 5% by mass or more and 100% by mass or less, more preferably 11% by mass or more and 100% by mass or less, further preferably 30% by mass or more and 100% by mass or less, particularly preferably 50% by mass or more and 100% by mass or less, and most preferably 60% by mass or more and 100% by mass or less with respect to the total content (100% by mass) of the above-mentioned thixotropic agent.

When the ratio of the content of the specific thixotropic agent is within the above-mentioned range, an increase in viscosity when stored at 30°C can be minimized, and also, a decrease in viscosity when stored at 30°C can be reduced.

When the above-mentioned flux contains the above-mentioned ester-based thixotropic agent, the content of the above-mentioned ester-based thixotropic agent is preferably more than 0% by mass and equal to or less than 10% by mass, more preferably more than 0% by mass and equal to or less than 5% by mass, and further preferably more than 0% by mass and equal to or less than 4% by mass with respect to the total amount (100% by mass) of the above-mentioned flux.

### <Activator>

Examples of the activator contained in the flux of the present embodiment include an organic acid-based activator, a halogen-based activator, and an amine-based activator.

The flux of the present embodiment preferably contains one or more selected from the group consisting of an organic acid-based activator and a halogen-based activator.

### <<Organic acid-based activator>>

Example of the organic acid-based activators include glutaric acid, adipic acid, azelaic acid, eicosanedioic acid, citric acid, glycolic acid, succinic acid, salicylic acid, diglycolic acid, dipicolinic acid, dibutylaniline diglycolic acid, suberic acid, sebacic acid, thioglycolic acid, dithioglycolic acid, terephthalic acid, dodecanedioic acid, parahydroxyphenylacetic acid, picolinic acid, phenylsuccinic acid, phthalic acid, fumaric acid, maleic acid, malonic acid, lauric acid, benzoic acid, tartaric acid, tris(2-carboxyethyl)isocyanurate, glycine, 1,3-cyclohexanedicarboxylic acid, 2,2-bis(hydroxymethyl)propionic acid, 2,2-bis(hydroxymethyl)butanoic acid, 2,3-dihydroxybenzoic acid, 2,4-diethylglutaric acid, 2-quinolinecarboxylic acid, 3-hydroxybenzoic acid, propionic acid, malic acid, p-anisic acid, stearic acid, 12-hydroxystearic acid, oleic acid, linoleic acid, linolenic acid, palmitic acid, pimelic acid, dimer acid, trimer acid, hydrogenated dimer acid, which is a hydrogenated product obtained by adding hydrogen to dimer acid, and hydrogenated trimer acid, which is a hydrogenated product obtained by adding hydrogen to trimer acid.

Examples of the dimer acid and the trimer acid include dimer acid which is the reaction product of oleic acid and linoleic acid, trimer acid which is the reaction product of oleic acid and linoleic acid, dimer acid which is the reaction product of acrylic acid, trimer acid which is the reaction product of acrylic acid, dimer acid which is the reaction product of methacrylic acid, trimer acid which is the reaction product of methacrylic acid, dimer acid which is the reaction product of acrylic acid and methacrylic acid, trimer acid which is the reaction product of acrylic acid and methacrylic acid, dimer acid which is the reaction product of oleic acid, trimer acid which is the reaction product of oleic acid, dimer acid which is the reaction product of linoleic acid, trimer acid which is the reaction product of linoleic acid, dimer acid which is the reaction product of linolenic acid, trimer acid which is the reaction product of linolenic acid, dimer acid which is the reaction product of acrylic acid and oleic acid, trimer acid which is the reaction product of acrylic acid and oleic acid, dimer acid which is the reaction product of acrylic acid and linoleic acid, trimer acid which is the reaction product of acrylic acid and linoleic acid, dimer acid which is the reaction product of acrylic acid and linolenic acid, trimer acid which is the reaction product of acrylic acid and linolenic acid, dimer acid which is the reaction product of methacrylic acid and oleic acid, trimer acid which is the reaction product of methacrylic acid and oleic acid, dimer acid which is the reaction product of methacrylic acid and linoleic acid, trimer acid which is the reaction product of methacrylic acid and linoleic acid, dimer acid which is the reaction product of methacrylic acid and linolenic acid, trimer acid which is the reaction product of methacrylic acid and linolenic acid, dimer acid which is the reaction product of oleic acid and linolenic acid, trimer acid which is the reaction product of oleic acid and linolenic acid, dimer acid which is the reaction product of linoleic acid and linolenic acid, trimer acid which is the reaction product of linoleic acid and linolenic acid, hydrogenated dimer acid which is the hydrogenated product of each of the above-mentioned dimer acids, and hydrogenated trimer acid which is the hydrogenated product of each of the above-mentioned trimer acid.

For example, dimer acid, which is the reaction product of oleic acid and linoleic acid, is a dimer having 36 carbon atoms. Furthermore, trimer acid, which is the reaction product of oleic acid and linoleic acid, is a trimer having 54 carbon atoms.

For the organic acid-based activator, one type may be used alone, or two or more types may be mixed and used.

As the above-mentioned organic acid-based activator, a carboxylic acid is preferably used.

As the above-mentioned carboxylic acid, it is preferable to use an aliphatic carboxylic acid. As the above-mentioned aliphatic carboxylic acid, it is preferable to use an aliphatic dicarboxylic acid.

As the above-mentioned aliphatic dicarboxylic acid, it is preferable to use one or more selected from the group consisting of glutaric acid and azelaic acid.

### «Halogen-based activator»

Examples of the halogen-based activator include amine hydrohalic acid salts, and organic halogenated compounds other than amine hydrohalic acid salts.

An amine hydrohalic acid salt is a compound obtained by reacting an amine with a hydrogen halide. Examples of the amines herein include amines described as examples in <<Amine-based activator>> to be described later. Examples of the hydrogen halides include hydrides of chlorine, bromine, and iodine.

More specifically, examples of the amine hydrohalic acid salts include cyclohexylamine hydrobromide, hexadecylamine hydrobromide, stearylamine hydrobromide, ethylamine hydrobromide, diphenylguanidine hydrobromide, ethylamine hydrochloride, stearylamine hydrochloride, diethylaniline hydrochloride, diethanolamine hydrochloride, 2-ethylhexylamine hydrobromide, pyridine hydrobromide, isopropylamine hydrobromide, diethylamine hydrobromide, dimethylamine hydrobromide, dimethylamine hydrochloride, rosinamine hydrobromide, 2-ethylhexylamine hydrochloride, isopropylamine hydrochloride, cyclohexylamine hydrochloride, 2-pipecoline hydrobromide, 1,3-diphenylguanidine hydrochloride, dimethylbenzylamine hydrochloride, hydrazine hydrate hydrobromide, dimethylcyclohexylamine hydrochloride, trinonylamine hydrobromide, diethylaniline hydrobromide, 2-diethylaminoethanol hydrobromide, 2-diethylaminoethanol hydrochloride, ammonium chloride, diallylamine hydrochloride, diallylamine hydrobromide, diethylamine hydrochloride, triethylamine hydrobromide, triethylamine hydrochloride, hydrazine monohydrochloride, hydrazine dihydrochloride, hydrazine monohydrobromide, hydrazine dihydrobromide, pyridine hydrochloride, aniline hydrobromide, butylamine hydrochloride, hexylamine hydrochloride, n-octylamine hydrochloride, dodecylamine hydrochloride, dimethylcyclohexylamine hydrobromide, ethylenediamine dihydrobromide, rosinamine hydrobromide, 2-phenylimidazole hydrobromide, 4-benzylpyridine hydrobromide, L-glutamic acid hydrochloride, N-methylmorpholine hydrochloride, betaine hydrochloride, 2-pipecoline hydroiodide, cyclohexylamine hydroiodide, 1,3-diphenylguanidine hydrofluoride, diethylamine hydrofluoride, 2-ethylhexylamine hydrofluoride, cyclohexylamine hydrofluoride, ethylamine hydrofluoride, rosinamine hydrofluoride, cyclohexylamine tetrafluoroborate, and dicyclohexylamine tetrafluoroborate.

Furthermore, as the halogen-based activator, for example, a salt obtained by reacting an amine with tetrafluoroboric acid (HBF₄), and a complex obtained by reacting an amine with boron trifluoride (BF₃) can also be used.

Examples of the above-mentioned complex include boron trifluoride piperidine.

Examples of the organic halogenated compounds other than the amine hydrohalic acid salts include halogenated aliphatic compounds having a halogenated aliphatic hydrocarbon group. The halogenated aliphatic hydrocarbon group refers to one in which a part or all of hydrogen atoms constituting the aliphatic hydrocarbon group are substituted with halogen atoms.

Examples of the halogenated aliphatic compound include halogenated aliphatic alcohols and halogenated heterocyclic compounds.

Examples of the halogenated aliphatic alcohols include 1-bromo-2-propanol, 3-bromo-1-propanol, 3-bromo-1,2-propanediol, 1-bromo-2-butanol, 1,3-dibromo-2-propanol, 2,3-dibromo-1-propanol, 1,4-dibromo-2-butanol, and trans-2,3-dibromo-2-butene-1,4-diol.

Examples of the halogenated heterocyclic compounds include a compound represented by General Formula (3) below.

R⁵-(R⁶)ₘ (3)

[In the formula, R⁵ represents an m-valent heterocyclic group, and R⁶ represents a halogenated aliphatic hydrocarbon group.]

Examples of heterocyclic rings of the m-valent heterocyclic group as R⁵ include a ring structure in which a part of carbon atoms constituting an aliphatic hydrocarbon ring or an aromatic hydrocarbon ring is substituted with a heteroatom. Examples of the heteroatom in this heterocyclic ring include an oxygen atom, a sulfur atom, and a nitrogen atom. This heterocyclic ring is preferably a 3- to 10-membered ring, and more preferably a 5- to 7-membered ring. Examples of this heterocyclic ring include an isocyanurate ring.

The halogenated aliphatic hydrocarbon group as R⁶ preferably has 1 to 10 carbon atoms, more preferably 2 to 6 carbon atoms, and further preferably 3 to 5 carbon atoms. Furthermore, R⁶ is preferably a brominated aliphatic hydrocarbon group or a chlorinated aliphatic hydrocarbon group, more preferably a brominated aliphatic hydrocarbon group, and further preferably a brominated saturated aliphatic hydrocarbon group.

Examples of the halogenated heterocyclic compounds include tris-(2,3-dibromopropyl)isocyanurate.

Examples of the organic halogenated compounds other than the amine hydrohalic acid salts further include halogenated carboxyl compounds such as carboxyl iodide compounds such as 2-iodobenzoic acid, 3-iodobenzoic acid, 2-iodopropionic acid, 5-iodosalicylic acid, 5-iodoanthranilic acid; carboxyl chloride compounds such as 2-chlorobenzoic acid and 3-chloropropionic acid; and brominated carboxyl compounds such as 2,3-dibromopropionic acid, 2,3-dibromosuccinic acid, and 2-bromobenzoic acid.

For the halogen-based activator, one type may be used alone, or two or more types may be mixed and used.

As the above-mentioned halogen-based activator, it is preferable to use an organic halogenated compound, it is more preferable to use a halogenated aliphatic compound, and it is further preferable to use a halogenated aliphatic alcohol.

As the above-mentioned halogenated aliphatic alcohol, it is preferable to use trans-2,3-dibromo-2-butene-1,4-diol.

### <<Amine-based activator>>

Examples of the amine-based activators include a rosin amine, azoles, guanidines, alkylamine compounds, and aminoalcohol compounds.

Examples of the rosin amines include those described as examples in <<Other rosins>> described above.

Examples of the azoles include 2-methylimidazole, 2-ethylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, a 2,4-diamino-6-[2'-methylimidazolyl-(1')]-ethyl-s-triazine isocyanuric acid adduct, a 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, 2-phenylimidazoline, 2,4-diamino-6-vinyl-s-triazine, a 2,4-diamino-6-vinyl-s-triazine isocyanuric acid adduct, 2,4-diamino-6-methacryloyloxyethyl-s-triazine, an epoxy-imidazole adduct, 2-methylbenzimidazole, 2-octylbenzimidazole, 2-pentylbenzimidazole, 2-(1-ethylpentyl)benzimidazole, 2-nonylbenzimidazole, 2-(4-thiazolyl)benzimidazole, benzimidazole, 1,2,4-triazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], 6-(2-benzotriazolyl)-4-tert-octyl-6'-tert-butyl-4'-methyl-2,2'-methylenebisphenol, 1,2,3-benzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, 2,2'-[[(methyl-1H-benzotriazol-1-yl)methyl]imino]bisethanol, 1-(1',2'-dicarboxyethyl)benzotriazole, 1-(2,3-dicarboxypropyl)benzotriazole, 1-[(2-ethylhexylamino)methyl]benzotriazole, 2,6-bis[(1H-benzotriazol-1-yl)methyl]-4-methylphenol, 5-methylbenzotriazole, and 5-phenyltetrazole.

Examples of the guanidines include 1,3-diphenylguanidine, 1,3-di-o-tolylguanidine, 1-o-tolylbiguanide, 1,3-di-o-cumenylguanidine, and 1,3-di-o-cumenyl-2-propionylguanidine.

Examples of the alkylamine compounds include ethylamine, triethylamine, ethylenediamine, triethylenetetramine, cyclohexylamine, hexadecylamine, and stearylamine.

Examples of the aminoalcohol compounds include N,N,N',N'-tetrakis(2-hydroxypropyl)ethylenediamine.

For the amine-based activator, one type may be used alone, or two or more types may be mixed and used.

The total content of the above-mentioned activator in the above-mentioned flux is preferably 0.2% by mass or more and 20% by mass or less, more preferably 0.5% by mass or more and 10% by mass or less, and further preferably 1% by mass or more and 10% by mass or less with respect to the total amount (100% by mass) of the flux.

Alternatively, the total content of the activator in the above-mentioned flux is preferably 1% by mass or more and 20% by mass or less with respect to the total amount (100% by mass) of the above-mentioned flux.

The content of the organic acid-based activator in the above-mentioned flux is preferably 0% by mass or more and 20% by mass or less, more preferably 0.5% by mass or more and 15% by mass or less, further preferably 2% by mass or more and 10% by mass or less, and particularly preferably 5% by mass or more and 10% by mass or less with respect to the total amount (100% by mass) of the above-mentioned flux.

The content of the above-mentioned halogen-based activator in the above-mentioned flux is preferably 0% by mass or more and 5% by mass or less, more preferably 0% by mass or more and 3% by mass or less, further preferably 0.5% by mass or more and 3% by mass or less, and particularly preferably 1% by mass or more and 3% by mass or less with respect to the total amount (100% by mass) of the above-mentioned flux.

### <Solvent>

Examples of the solvents include water, alcohol solvents, glycol ether solvents, and terpineols.

Examples of the alcohol solvents include isopropyl alcohol, 1,2-butanediol, isobornyl cyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 2-methylpentane-2,4-diol, 1,1,1-tris(hydroxymethyl)propane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, 1-ethynyl-1-cyclohexanol, 1,4-cyclohexanediol, 1,4-cyclohexanedimethanol, and 2,4,7,9-tetramethyl-5-decyne-4,7-diol.

Examples of the glycol ether solvents include diethylene glycol mono-2-ethylhexyl ether, ethylene glycol monophenyl ether, diethylene glycol monohexyl ether (hexyl diglycol), diethylene glycol dibutyl ether, triethylene glycol monobutyl ether, methyl propylene triglycol, butyl propylene triglycol, triethylene glycol butylmethyl ether, and tetraethylene glycol dimethyl ether.

For the solvent, one type may be used alone, or two or more types may be mixed and used.

As the above-mentioned solvent, it is preferable to use a glycol ether solvent.

As the above-mentioned glycol ether solvent, it is preferable to use hexyl diglycol.

The total content of the above-mentioned solvent in the above-mentioned flux is preferably 20% by mass or more and 80% by mass or less, more preferably 30% by mass or more and 75% by mass or less, and further preferably 37% by mass or more and 67% by mass or less with respect to the total amount (100% by mass) of the above-mentioned flux.

### <Other components>

The flux in the present embodiment may contain other components as necessary in addition to the rosin, the thixotropic agent, the activator, and the solvent.

Examples of the other components include resin components other than rosin, metal deactivators, surfactants, silane coupling agents, and antioxidants.

Resin component other than rosin:
Examples of the resin components other than rosin include a terpene resin, a modified terpene resin, a terpene phenol resin, a modified terpene phenol resin, a styrene resin, a modified styrene resin, a xylene resin, a modified xylene resin, an acrylic resin, a polyethylene resin, an acrylic-polyethylene copolymer resin, and an epoxy resin.
Examples of the modified terpene resin include an aromatic modified terpene resin, a hydrogenated terpene resin, and a hydrogenated aromatic modified terpene resin. Examples of the modified terpene phenol resin include a hydrogenated terpene phenol resin. Examples of the modified styrene resin include a styrene acrylic resin and a styrene maleic acid resin. Examples of the modified xylene resin include a phenol-modified xylene resin, an alkylphenol-modified xylene resin, a phenol-modified resol-type xylene resin, a polyol-modified xylene resin, and a polyoxyethylene-added xylene resin.

### Metal deactivator:

Examples of the metal deactivators include hindered phenolic compounds and nitrogen compounds.

The term "metal deactivator" herein refers to a compound having a capacity to prevent metal from deteriorating due to contact with a certain type of compound.

The hindered phenolic compound refers to a phenolic compound having a bulky substituent (for example, a branched or cyclic alkyl group such as a t-butyl group) on at least one of the ortho positions of phenol.

The hindered phenolic compound is not particularly limited, and examples thereof include bis[3-(3-tert-butyl-4-hydroxy-5-methylphenyl)propionic acid][ethylenebis(oxyethylene)], N,N'-hexamethylenebis[3-(3,5-di-tert-butyl-4-hydroxyphenyl)propanamide], 1,6-hexanediol bis[3-(3,5-di-tert-butyl-4-hydroxyphenyl)propionate], 2,2' -methylenebis[6-(1-methylcyclohexyl)-p-cresol], 2,2'-methylenebis(6-tert-butyl-p-cresol), 2,2'-methylenebis(6-tert-butyl-4-ethylphenol), triethylene glycol-bis[3-(3-tert-butyl-5-methyl-4-hydroxyphenyl)propionate], 1,6-hexanediol-bis-[3-(3,5-di-tert-butyl-4-hydroxyphenyl)propionate], 2,4-bis-(n-octylthio)-6-(4-hydroxy-3,5-di-t-butylanilino)-1,3,5-triazine, pentaerythrityl-tetrakis[3-(3,5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-t-butyl-4-hydroxy-hydrocinnamamide), 3,5-di-tert-butyl-4-hydroxybenzylphosphonate-diethyl ester, 1,3,5-trimethyl-2,4,6-tris(3,5-di-tert-butyl-4-hydroxybenzyl)benzene, N,N'-bis[2-[2-(3,5-di-tert-butyl-4-hydroxyphenyl)ethylcarbonyloxy]ethyl]oxamide, and a compound represented by the following chemical formula. 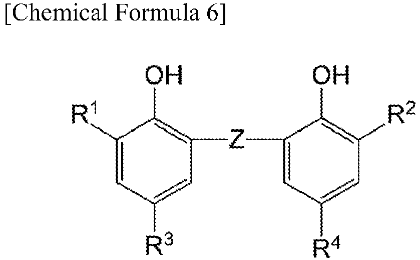 [In the formula, Z is an alkylene group that may be substituted; R¹ and R² are each independently an alkyl group, an aralkyl group, an aryl group, a heteroaryl group, a cycloalkyl group, or a heterocycloalkyl group, which may be substituted; and R³ and R⁴ are each independently an alkyl group that may be substituted.]

Examples of the nitrogen compounds in the metal deactivator include hydrazide-based nitrogen compounds, amide-based nitrogen compounds, triazole-based nitrogen compounds, and melamine-based nitrogen compounds.

The hydrazide-based nitrogen compound may be any nitrogen compound having a hydrazide skeleton, and examples thereof include dodecanedioate bis[N2-(2-hydroxybenzoyl)hydrazide], N,N' -bi s [3-(3,5 -di -tert-butyl -4-hydroxyphenyl)propionyl]hydrazine, decanedicarboxylic acid disalicyloyl hydrazide, N-salicylidene-N'-salicylhydrazide, m-nitrobenzhydrazide, 3-aminophthalhydrazide, phthalic dihydrazide, adipic hydrazide, oxalobis(2-hydroxy-5-octylbenzylidene hydrazide), N'-benzoylpyrrolidone carboxylic acid hydrazide, and N,N'-bis(3-(3,5-di-tert-butyl-4-hydroxyphenyl)propionyl)hydrazine.

The amide-based nitrogen compound may be any nitrogen compound having an amide skeleton, and examples thereof include N,N'-bis{2-[3-(3,5-di-tert-butyl-4-hydroxyphenyl)propionyloxyl] ethyl I oxamide.

The triazole-based nitrogen compound may be any nitrogen compound having a triazole skeleton, and examples thereof include N-(2H-1,2,4-triazol-5-yl) salicylamide, 3-amino-1,2,4-triazole, and 3-(N-salicyloyl)amino-1,2,4-triazole.

The melamine-based nitrogen compound may be any nitrogen compound having a melamine skeleton, and examples thereof include melamine and melamine derivatives. More specifically, examples thereof include trisaminotriazine, alkylated trisaminotriazine, alkoxyalkylated trisaminotriazine, melamine, alkylated melamine, alkoxyalkylated melamine, N2-butylmelamine, N2,N2-diethylmelamine, and N,N,N' ,N' ,N" ,N" -hexakis(methoxymethyl)melamine.

Examples of the surfactants include nonionic surfactants and weak cationic surfactants.

Examples of the nonionic surfactants include polyethylene glycol, a polyethylene glycol-polypropylene glycol copolymer, an aliphatic alcohol polyoxyethylene adduct, an aromatic alcohol polyoxyethylene adduct, and a polyhydric alcohol polyoxyethylene adduct.

Examples of the weak cationic surfactants include diamine-terminated polyethylene glycol, a diamine-terminated polyethylene glycol-polypropylene glycol copolymer, an aliphatic amine polyoxyethylene adduct, an aromatic amine polyoxyethylene adduct, and a polyvalent amine polyoxyethylene adduct.

Examples of surfactants other than the above-mentioned examples include polyoxyalkylene acetylene glycols, polyoxyalkylene glyceryl ethers, polyoxyalkylene alkyl ethers, polyoxyalkylene esters, polyoxyalkylene alkylamines, and polyoxyalkylene alkylamides.

Since the flux of the present embodiment described above contains one or more selected from the group consisting of an acid-modified rosin, a hydrogenated rosin, and an acid-modified hydrogenated rosin, and contains the specific thixotropic agent, an increase in viscosity when stored at 30°C can be minimized.

When the flux of the present embodiment contains the specific thixotropic agent, the cleanability of flux residues can be made favorable, and also, a decrease in viscosity when stored at 30°C can be sufficiently minimized.

Since the flux of the present embodiment contains one or more selected from the group consisting of an acid-modified rosin, a hydrogenated rosin, and an acid-modified hydrogenated rosin, the reflow properties are sufficient, and also, the coloration of flux residues can be sufficiently minimized.

In the flux of the present embodiment, by the synergistic action of the combination of one or more selected from the group consisting of an acid-modified rosin, a hydrogenated rosin, and an acid-modified hydrogenated rosin, and the specific thixotropic agent, it is possible to minimize the time-dependent changes in viscosity when stored at 30°C and to minimize the coloration of flux residues while having favorable reflow properties and favorable cleanability of flux residues.

### (Solder paste)

A solder paste of the present embodiment contains a solder alloy powder and the above-mentioned flux.

The solder alloy powder may be constituted of an Sn-only solder powder; or a powder of an Sn-Ag-based, Sn-Cu-based, Sn-Ag-Cu-based, Sn-Bi-based, or Sn-In-based solder alloy, or a powder of solder alloys in which Sb, Bi, In, Cu, Zn, As, Ag, Cd, Fe, Ni, Co, Au, Ge, P, or the like has been added to the above alloys.

The solder alloy powder may be constituted of a powder of an Sn-Pb-based solder alloy, or a powder of solder alloys in which Sb, Bi, In, Cu, Zn, As, Ag, Cd, Fe, Ni, Co, Au, Ge, P, or the like has been added to the Sn-Pb-based solder alloy.

The solder alloy powder is preferably a Pb-free solder.

### Content of flux:

The content of the flux in the solder paste is preferably 5% to 30% by mass and more preferably 5% to 15% by mass with respect to the total mass of the solder paste.

Since the solder paste of the present embodiment uses the flux containing one or more selected from the group consisting of an acid-modified rosin, a hydrogenated rosin, and an acid-modified hydrogenated rosin, and containing the specific thixotropic agent, it is possible to minimize the time-dependent changes in viscosity when stored at 30°C.

Since the solder paste of the present embodiment contains the above-mentioned flux, the effects of the present invention can be sufficiently exhibited.

### [Examples]

Hereinafter, the present invention will be described with reference to examples, but the present invention is not limited to the following examples.

### <Preparation of flux>

### (Examples 1 to 10 and Comparative Examples 1 to 10)

Each of fluxes of examples and comparative examples was blended using the compositions shown in Tables 1 to 5.

Raw materials used are described below.

Specific rosin: acrylic acid-modified hydrogenated rosin and hydrogenated rosin

As the hydrogenated rosin, a rosin containing dihydroabietic acid and tetrahydroabietic acid as main components was used.

Other rosins: rosin esters and polymerized rosins

Specific thixotropic agent: m-xylylene bis hydroxystearic acid amide
Amide-based thixotropic agent: polyamide, N,N'-bis(2-stearamidoethyl)-azelaicamide, and ethylene bis hydroxystearic acid amide
Ester-based thixotropic agent: hydrogenated castor oil
Activator: glutaric acid, azelaic acid, trans-2,3-dibromo-2-butene-1,4-diol
Solvent: hexyl diglycol

### <Preparation of solder paste>

Each of the fluxes of each of the examples and the following solder alloy powders were mixed to blend solder pastes. In all of the blended solder pastes, the flux was 13% by mass, and the solder alloy powder was 87% by mass.

The solder alloy powder consists of a solder alloy containing 3% by mass of Ag, 0.5% by mass of Cu, and the balance of Sn.

The solder alloy powder has a size (particle size distribution) satisfying symbol 6 in the powder size classification (Table 2) in JIS Z 3284-1:2014.

Regarding the solder paste prepared above, according to the evaluation method described in <Evaluation> below, the following evaluations were performed:
«Evaluation of increase in viscosity when stored at 30°C», «Evaluation of decrease in viscosity when stored at 30°C», «Evaluation of reflow properties», «Evaluation of cleanability of flux residues», and «Evaluation of color of flux residues». These evaluation results are shown in Tables 1 to 5.

### <Evaluation>

### «Evaluation of increase in viscosity when stored at 30°C»

### Verification method:

First, the viscosity of each of the prepared solder pastes was measured at a rotation speed: 10 rpm and a measurement temperature: 25°C using a rotational viscometer (PCU-205, manufactured by Malcom Co., Ltd.).

Subsequently, each of the solder pastes was stored at 30°C for 24 hours. Subsequently, the viscosity of the solder paste after storing was measured by the same method as that of the viscosity measurement of the solder paste before storing. Then, the viscosity before storing and the viscosity after storing were compared to perform evaluation according to the following determination criteria.

### Determination criteria:

### A: Viscosity after storing < viscosity before storing × 1.25

An increase in viscosity was small, and the temporal stability of the viscosity was favorable.

### B: Viscosity after storing ≥ viscosity before storing × 1.25

An increase in viscosity was large, and the temporal stability of the viscosity was poor.

### «Evaluation of decrease in viscosity when stored at 30°C»

### Verification method:

The viscosity was measured by the same method as that in «Evaluation of increase in viscosity when stored at 30°C» described above.

### Determination criteria:

### A: Viscosity after storing > initial viscosity × 0.85

A decrease in viscosity over time was small, and the stability of the viscosity was favorable.

### B: Viscosity after storing ≤ initial viscosity × 0.85

A decrease in viscosity over time was large, and the stability of the viscosity was poor.

### «Evaluation of reflow properties»

### Verification method:

The solder paste was printed on a copper plate using a metal mask (thickness 0.2 mm, aperture ϕ6.5 mm). The copper plate on which the solder paste was printed was subjected to reflow in a nitrogen atmosphere to melt the solder paste.

### Determination criteria:

A: The solder paste was melted and showed glossiness.
B: The solder paste was not sufficiently melted and showed no glossiness.

FIG. 1 shows the determination criteria for evaluating the reflow properties after reflow of the copper plate on which the solder paste had been printed. In FIG. 1, A means that the evaluation of reflow properties was a determination criterion A, and B means that the evaluation of reflow properties was a determination criterion B.

### «Evaluation of cleanability of flux residues»

### Verification method:

The solder paste was printed on a copper plate using a metal mask (thickness 0.2 mm, aperture ϕ6.5 mm). The copper plate on which the solder paste was printed was subjected to reflow in a nitrogen atmosphere to melt the solder paste. The copper plate after the reflow was immersed in a cleaning liquid at 30°C to apply ultrasonic waves for 5 minutes. As the cleaning liquid, Toho Clean W-312 was used. Subsequently, the presence or absence of flux residues on the copper plate after cleaning was confirmed to perform evaluation based on the following determination criteria.

### Determination criteria:

A: No flux residues were recognized on the copper plate.
B: Flux residues were recognized on the copper plate.

### «Evaluation of color of flux residues»

### Verification method:

The solder paste was printed on a copper plate using a metal mask (thickness 0.2 mm, aperture ϕ6.5 mm). The copper plate on which the solder paste was printed was subjected to reflow in a nitrogen atmosphere to melt the solder paste. Subsequently, the color of flux residues was evaluated based on the following determination criteria.

### Determination criteria:

A: The flux residues were colorless.
B: The flux residues were colored.

**[Table 1]**

| | | | Ex. 1 | Com. Ex. 1 | Com. Ex. 2 | Com. Ex. 3 | Com. Ex. 4 |
|---|---|---|---|---|---|---|---|
| Rosin | Specific rosin | Acrylic acid-modified hydrogenated rosin | 43.5 | 43.5 | 43.5 | 43.5 | 43.5 |
| | | Hydrogenated rosin | | | | | |
| | Other rosins | Rosin ester | | | | | |
| | | Polymerized rosin | | | | | |
| Thixotropic agent | Specific thixotropic agent | m-Xylylene bis hydroxystearic acid amide | 8 | | | | |
| | Amide-based thixotropic agent | Polyamide | | | 8 | | |
| | | N,N'-bis( 2-stearamidoethyl)-azelaicamide | | | | 8 | |
| | | Ethylene bis hydroxystearic acid amide | | | | | 8 |
| | Ester-based thixotropic agent | Hydrogenated castor oil | | 8 | | | |
| Activator | | Glutaric acid | 5 | 5 | 5 | 5 | 5 |
| | | Azelaic acid | | | | | |
| | | Trans-2,3-dibromo-2-butene-1,4-diol | | | | | |
| Solvent | | Hexyl diglycol | 43.5 | 43.5 | 43.5 | 43.5 | 43.5 |
| Total (% by mass) | | | 100 | 100 | 100 | 100 | 100 |
| Evaluation | Increase in viscosity when stored at 30°C | | A | B | A | A | A |
| | Decrease in viscosity when stored at 30°C | | A | A | A | A | B |
| | Reflow properties | | A | A | A | A | A |
| | Cleanability of flux residues | | A | A | B | B | B |
| | Color of flux residues | | A | A | A | A | A |

As shown in Table 1, the flux of Example 1 containing the specific rosin and the specific thixotropic agent was evaluated as A in all of an increase in viscosity when stored at 30°C, a decrease in viscosity when stored at 30°C, the reflow properties, and the cleanability of the flux residues, and the color of each of the flux residues.

In this regard, the flux of Comparative Example 1 not containing the specific thixotropic agent but containing a hydrogenated castor oil was evaluated as B in an increase in viscosity when stored at 30°C.

Furthermore, the flux of Comparative Example 2 not containing the specific thixotropic agent but containing a polyamide was evaluated as B in the cleanability of the flux residues.

Furthermore, the flux of Comparative Example 3 not containing the specific thixotropic agent but containing N,N'-bis(2-stearamidoethyl)-azelaicamide was evaluated as B in the cleanability of the flux residues.

Furthermore, the flux of Comparative Example 4 not containing the specific thixotropic agent but containing ethylene bis hydroxystearic acid amide was evaluated as B in a decrease in viscosity when stored at 30°C and in the cleanability of the flux residues.

**[Table 2]**

| | | | Ex. 7 | Ex. 8 | Com. Ex. 5 | Com. Ex. 6 | Com. Ex. 7 | Com. Ex. 8 |
|---|---|---|---|---|---|---|---|---|
| Rosin | Specific rosin | Acrylic acid-modified hydrogenated rosin | | 43.5 | 43.5 | | | |
| | | Hydrogenated rosin | 43.5 | | | 43.5 | | |
| | Other rosins | Rosin ester | | | | | 43.5 | |
| | | Polymerized rosin | | | | | | 43.5 |
| Thixotropic agent | Specific thixotropic agent | m-Xylylene bis hydroxystearic acid amide | 4 | 0.5 | | | | |
| | Amide-based thixotropic agent | Polyamide | | | | | | |
| | | N,N'-bis( 2-stearamidoethyl)-azelaicamide | | | | | | |
| | | Ethylene bis hydroxystearic acid amide | | | | | | |
| | Ester-based thixotropic agent | Hydrogenated castor oil | 4 | 4 | 4 | 4 | 4 | 4 |
| Activator | | Glutaric acid | 5 | 5 | 5 | 5 | 5 | 5 |
| | | Azelaic acid | | | | | | |
| | | Trans-2,3-dibromo-2-butene-1,4-diol | | | | | | |
| Solvent | | Hexyl diglycol | 43.5 | 47 | 47.5 | 47.5 | 47.5 | 47.5 |
| Total (% by mass) | | | 100 | 100 | 100 | 100 | 100 | 100 |
| Evaluation | Increase in viscosity when stored at 30°C | | A | A | B | B | A | A |
| | Decrease in viscosity when stored at 30°C | | A | A | A | A | A | A |
| | Reflow properties | | A | A | A | A | B | A |
| | Cleanability of flux residues | | A | A | A | A | A | A |
| | Color of flux residues | | A | A | A | A | A | B |

As shown in Table 2, the fluxes of Examples 7 and 8 containing the specific thixotropic agent and a hydrogenated castor oil were evaluated as A in an increase in viscosity when stored at 30°C.

In this regard, as shown in Table 2, the fluxes of Comparative Examples 5 and 6 not containing the specific thixotropic agent but containing a hydrogenated castor oil were evaluated as B in an increase in viscosity when stored at 30°C.

As shown in Table 2, the fluxes of Examples 7 and 8 containing the specific rosin were evaluated as A in the reflow properties and the color of the flux residues.

In this regard, as shown in Table 2, the flux of Comparative Example 7 containing a rosin ester was evaluated as B in the reflow properties.

Furthermore, the flux of Comparative Example 8 containing a polymerized rosin was evaluated as B in the color of the flux residues.

**[Table 3]**

| | | | Ex. 1 | Com. Ex. 9 | Com. Ex. 10 |
|---|---|---|---|---|---|
| Rosin | Specific rosin | Acrylic acid-modified hydrogenated rosin | 43.5 | | |
| | | Hydrogenated rosin | | | |
| | Other rosins | Rosin ester | | 43.5 | |
| | | Polymerized rosin | | | 43.5 |
| Thixotropic agent | Specific thixotropic agent | m-Xylylene bis hydroxystearic acid amide | 8 | 8 | 8 |
| | Amide-based thixotropic agent | Polyamide | | | |
| | | N,N'-bis( 2-stearamidoethyl)-azelaicamide | | | |
| | | Ethylene bis hydroxystearic acid amide | | | |
| | Ester-based thixotropic agent | Hydrogenated castor oil | | | |
| Activator | | Glutaric acid | 5 | 5 | 5 |
| | | Azelaic acid | | | |
| | | Trans-2,3-dibromo-2-butene-1,4-diol | | | |
| Solvent | | Hexyl diglycol | 43.5 | 43.5 | 43.5 |
| Total (% by mass) | | | 100 | 100 | 100 |
| Evaluation | Increase in viscosity when stored at 30°C | | A | A | A |
| | Decrease in viscosity when stored at 30°C | | A | A | A |
| | Reflow properties | | A | B | A |
| | Cleanability of flux residues | | A | A | A |
| | Color of flux residues | | A | A | B |

As shown in Table 3, the flux of Example 1 containing the specific rosin was evaluated as A in the reflow properties and the color of the flux residues.

In this regard, as shown in Table 3, the flux of Comparative Example 9 containing a rosin ester was evaluated as B in the reflow properties.

Furthermore, the flux of Comparative Example 10 containing a polymerized rosin was evaluated as B in the color of the flux residues.

**[Table 4]**

| | | | Ex. 2 | Ex. 3 | Ex. 4 | Ex. 5 | Ex. 6 | Ex. 9 | Ex. 10 |
|---|---|---|---|---|---|---|---|---|---|
| Rosin | Specific rosin | Acrylic acid-modified hydrogenated rosin | 43.5 | 43.5 | 20 | 50 | | 43.5 | 30 |
| | | Hydrogenated rosin | | | | | 43.5 | | |
| | Other rosins | Rosin ester | | | | | | | 13.5 |
| | | Polymerized rosin | | | | | | | |
| Thixotropic agent | Specific thixotropic agent | m-Xylylene bis hydroxystearic acid amide | 8 | 8 | 8 | 8 | 8 | 10 | 8 |
| | Amide-based thixotropic agent | Polyamide | | | | | | | |
| | | N,N'-bis( 2-stearamidoethyl)-azelaicamide | | | | | | | |
| | | Ethylene bis hydroxystearic acid amide | | | | | | | |
| | Ester-based thixotropic agent | Hydrogenated castor oil | | | | | | | |
| Activator | | Glutaric acid | | | 5 | 5 | 5 | 5 | 5 |
| | | Azelaic acid | 5 | | | | | | |
| | | Trans-2,3-dibromo-2-butene-1,4-diol | | 1 | | | | | |
| Solvent | | Hexyl diglycol | 43.5 | 47.5 | 67 | 37 | 43.5 | 41.5 | 43.5 |
| Total (% by mass) | | | 100 | 100 | 100 | 100 | 100 | 100 | 100 |
| Evaluation | Increase in viscosity when stored at 30°C | | A | A | A | A | A | A | A |
| | Decrease in viscosity when stored at 30°C | | A | A | A | A | A | A | A |
| | Reflow properties | | A | A | A | A | A | A | A |
| | Cleanability of flux residues | | A | A | A | A | A | A | A |
| | Color of flux residues | | A | A | A | A | A | A | A |

As shown in Table 4, the fluxes of Examples 2 to 6, 9, and 10 were evaluated as A in all of an increase in viscosity when stored at 30°C, a decrease in viscosity when stored at 30°C, the reflow properties, and the cleanability of the flux residues, and the color of each of the flux residues.

**[Table 5]**

| | | | Com. Ex. 5 | Ex. 1 | Ex. 6 | Ex. 8 |
|---|---|---|---|---|---|---|
| Rosin | Specific rosin | Acrylic acid-modified hydrogenated rosin | 43.5 | 43.5 | | 43.5 |
| | | Hydrogenated rosin | | | 43.5 | |
| | Other rosins | Rosin ester | | | | |
| | | Polymerized rosin | | | | |
| Thixotropic agent | Specific thixotropic agent | m-Xylylene bis hydroxystearic acid amide | | 8 | 8 | 0.5 |
| | Amide-based thixotropic agent | Polyamide | | | | |
| | | N,N'-bis( 2-stearamidoethyl)-azelaicamide | | | | |
| | | Ethylene bis hydroxystearic acid amide | | | | |
| | Ester-based thixotropic agent | Hydrogenated castor oil | 4 | | | 4 |
| Activator | | Glutaric acid | 5 | 5 | 5 | 5 |
| | | Azelaic acid | | | | |
| | | Trans-2,3-dibromo-2-butene-1,4-diol | | | | |
| Solvent | | Hexyl diglycol | 47.5 | 43.5 | 43.5 | 47 |
| Total (% by mass) | | | 100 | 100 | 100 | 100 |
| Evaluation | Viscosity increase rate (%) when stored at 30°C | | 40.0 | 16.0 | 19.3 | 21.3 |

Table 5 shows the viscosity increase rate (%) when stored at 30°C for the fluxes of Example 1, Example 6, Example 8, and Comparative Example 5.

The viscosity increase rate means a rate of increase in viscosity after storing with respect to the viscosity before storing, at the time of storing at 30°C as described in «Evaluation of increase in viscosity when stored at 30°C».

As shown in Table 5, in the flux of Comparative Example 5 not containing the specific thixotropic agent but containing an acrylic acid-modified hydrogenated rosin and a hydrogenated castor oil, the time-dependent changes in viscosity (viscosity increase rate) when stored at 30°C was 40.0%.

In this regard, in the flux of Example 8 containing 0.5% by mass of the specific thixotropic agent and containing an acrylic acid-modified hydrogenated rosin and a hydrogenated castor oil, the time-dependent changes in viscosity when stored at 30°C was 21.3%.

Furthermore, in the flux of Example 1 containing 8% by mass of the specific thixotropic agent and containing an acrylic acid-modified hydrogenated rosin, the time-dependent changes in viscosity when stored at 30°C was 16.0%.

In addition, in the flux of Example 6 containing 8% by mass of the specific thixotropic agent and containing a hydrogenated rosin, the time-dependent changes in viscosity when stored at 30°C was 19.3%.

It was clarified that, even when the flux of the present invention contains an acrylic acid-modified hydrogenated rosin or a hydrogenated rosin, when the flux contains the specific thixotropic agent, it is possible to minimize the time-dependent changes in viscosity when stored at 30°C.

### [Industrial Applicability]

The present invention can provide the flux and the solder paste capable of minimizing the time-dependent changes in viscosity when stored at 30°C and minimizing the coloration of flux residues while having favorable reflow properties and favorable cleanability of flux residues. The solder paste and the flux can be suitably used for soldering accompanied by reflow.

## Claims

1. A flux comprising:
a rosin;
a thixotropic agent;
an activator; and
a solvent,
wherein the rosin includes one or more selected from the group consisting of an acid-modified rosin, a hydrogenated rosin, and an acid-modified hydrogenated rosin, and
the thixotropic agent includes a compound represented by General Formula (1), 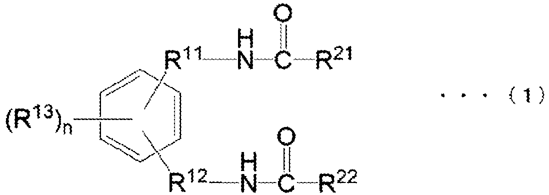
[in the formula, R¹¹ and R¹² each independently represent a hydrocarbon group which has 1 to 3 carbon atoms and may have a substituent, or a single bond; R²¹ and R²² each independently represent a hydrocarbon group which has 7 to 29 carbon atoms and may have a substituent; R¹³ represents a substituent; and n represents an integer of 0 to 4].

2. The flux according to Claim 1,
wherein a content of the compound represented by General Formula (1) is 0.5% by mass or more and 10% by mass or less with respect to a total mass of the flux.

3. The flux according to Claim 1 or 2,
wherein the thixotropic agent further includes an ester-based thixotropic agent, and
a content of the ester-based thixotropic agent is more than 0% by mass and equal to or less than 4% by mass with respect to a total mass of the flux.

4. The flux according to any one of Claims 1 to 3,
wherein a content of the activator is 1% by mass or more and 20% by mass or less with respect to a total mass of the flux.

5. A solder paste comprising:
a solder alloy powder; and
the flux according to any one of Claims 1 to 4.
